# EUROPEAN PATENT APPLICATION

(11) **EP 3 098 151 A1**
(43) Date of publication of application: **30.11.2016**
(21) Application number: 16001178.9
(22) Date of filing: 24.05.2016
(51) Int. Cl.: B62K 25/02, B62M 17/00

(54) **BICYCLE REAR WHEEL QUICK RELEASE STRUCTURE**

(30) Priority: 28.05.2015 TW 104117077
(71) Applicant: Motive Power Industry Co., Ltd., Dacun Township, Changhua County 515 (TW)
(72) Inventor: Cheng, Hsin-Lin, 515 Changhua County (TW); Teng, Ching-Chung, 515 Changhua County (TW)
(74) Representative: Wende, Christian Werner

(57) **Abstract**

A bicycle rear wheel quick release structure includes a rear hub (100), hub connector (200), quick release holder (300), quick release bolts (400) and fixing element (500). Flanked by an end plate and an opening, the rear hub receives a rear wheel transmission member (1). The end plate (110) has a central hole (111) and first positioning holes (112) surrounding the central hole which corresponds in position to the rear wheel transmission member centrally. Received in the rear hub (100) and coupled to rear wheel transmission member, the hub connector (200) has second positioning holes (220) and an axial post (210) with a fixing hole (211). The axial post is coaxial with the rear wheel transmission member and penetrates the central hole. Having a coupling hole (310), the quick release holder (300) is mounted on the end plate (110) and engaged with the quick release bolts (400) inserted into the communicated first and second positioning holes. The fixing element (500) penetrates the coupling hole and the fixing hole.

## Description

### FIELD OF THE INVENTION

The present invention relates to bicycle rear wheel quick release structures and, more particularly, to a bicycle rear wheel quick release structure applied to a rear wheel transmission structure and adapted to fix a rear hub to a transmission axle.

### BACKGROUND OF THE INVENTION

A rear wheel and a transmission axle of a conventional chainless bicycle operating by axial transmission are fixed in place by a plurality of screws. As a result, it is time-consuming and inconvenient to mount and demount the rear wheel and the transmission axle in an attempt to repair or change them.

### SUMMARY OF THE INVENTION

It is an objective of the present invention to provide a rear wheel quick release structure whereby a rear wheel can be demounted easily and quickly.

In order to achieve the above and other objectives, the present invention provides a bicycle rear wheel quick release structure which comprises a rear hub, a hub connector, a quick release holder, a plurality of quick release bolts and a fixing element. The rear hub is cylindrical and has therein a receiving space for receiving a rear wheel transmission member. The rear hub is flanked by an end plate and an opening. The end plate has a central hole and a plurality of first positioning holes. The central hole corresponds in position to the axis of the rear wheel transmission member. The first positioning holes are arranged to surround the central hole. The hub connector is received in the rear hub and has an axial post and a plurality of second positioning holes. The hub connector is coupled to the rear wheel transmission member. A fixing hole is disposed at one end of the axial post. The axial post is coaxial with the axis of the rear wheel transmission member and penetrates the central hole. The second positioning holes are in communication with the first positioning holes, respectively. The quick release holder is mounted on the end plate in a manner to face the other side of the hub connector. The quick release holder has a coupling hole. The quick release bolts are fixed to the quick release holder in a manner to face the rear hub. The quick release bolts are inserted into the first positioning holes and the second positioning holes, respectively. The fixing element penetrates the coupling hole of the quick release holder and gets fixed to the fixing hole of the hub connector so that the hub connector, the rear hub and the quick release holder are mounted in place.

Regarding the bicycle rear wheel quick release structure, the first positioning holes, the second positioning holes and the quick release bolts are in the number of four, respectively.

Regarding the bicycle rear wheel quick release structure, the coupling hole of the quick release holder has a first hole portion and a second hole portion, with the first hole portion corresponding in shape to the axial post to receive an end of the axial post, and the second hole portion corresponding in shape to the fixing element so as to be penetrated by the fixing element.

Regarding the bicycle rear wheel quick release structure, the coupling hole is centrally disposed at the quick release holder, with the quick release bolts arranged to surround the coupling hole and spaced apart equidistantly.

Regarding the bicycle rear wheel quick release structure, the fixing element is a screw, whereas the fixing hole is a screw hole.

Therefore, the rear wheel quick release structure has an advantage, that is, demounting the fixing element enables the separation of a rear wheel and a rear wheel transmission member so that the rear wheel can be mounted and demounted easily, quickly and conveniently.

### BRIEF DESCRIPTION OF THE DRAWINGS

Objectives, features, and advantages of the present invention are hereunder illustrated with specific embodiments in conjunction with the accompanying drawings, in which:
FIG. 1 is a perspective exploded view of bicycle rear wheel quick release structure according to an embodiment of the present invention;
FIG. 2 is a lateral exploded view of bicycle rear wheel quick release structure according to the embodiment of the present invention;
FIG. 3 is a schematic view of bicycle rear wheel quick release structure according to the embodiment of the present invention; and
FIG. 4 is a partial cross-sectional view of bicycle rear wheel quick release structure according to the embodiment of the present invention.

### DETAILED DESCRIPTION OF THE PREFERRED EMBODIMENTS

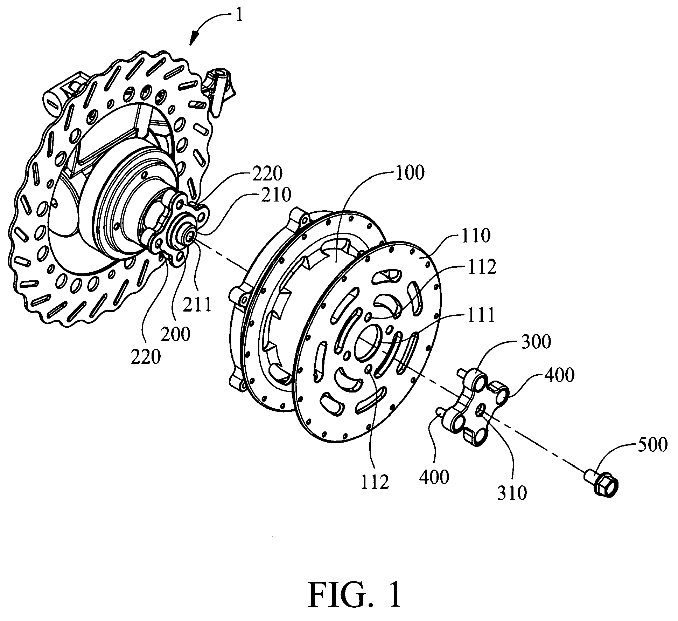

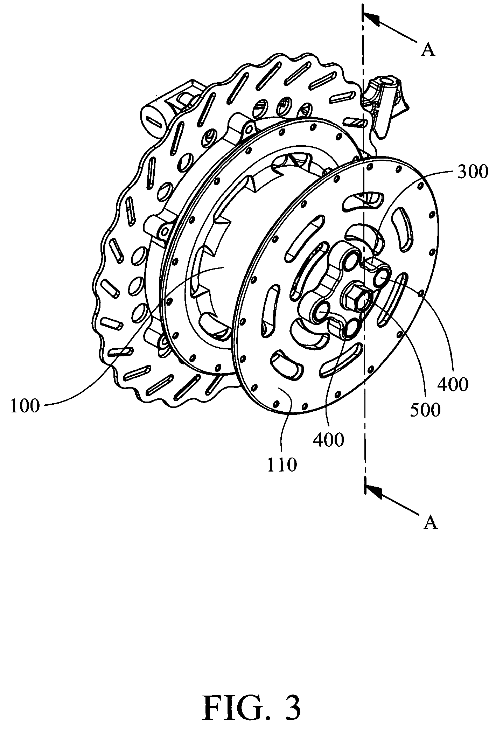

Referring to FIG. 1 through FIG. 3, in an embodiment of the present invention, a rear wheel quick release structure is applicable to a bicycle rear wheel transmission member, especially a chainless bicycle operating by axial transmission. The chainless bicycle operating by axial transmission is equipped with a plurality of bevel gears whereby the force exerted by a cyclist on pedals is transmitted to the rear wheel transmission member through a shaft rather than a chain and transmission gears.

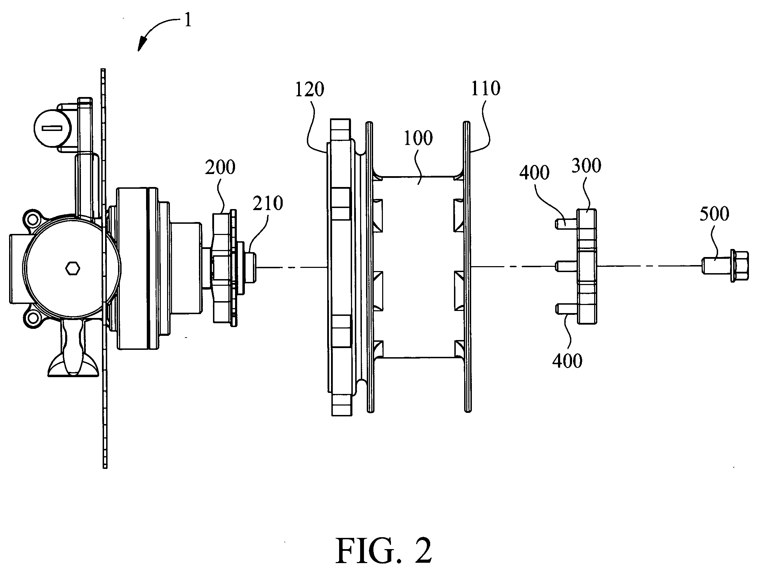

The rear wheel quick release structure comprises a rear hub 100, a hub connector 200, a quick release holder 300, a plurality of quick release bolts 400 and a fixing element 500. The rear hub 100 is cylindrical and has therein a receiving space for receiving a rear wheel transmission member 1. The rear hub 100 is flanked by an end plate 110 and an opening 120 (FIG. 2). The end plate 110 has a central hole 111 and a plurality of first positioning holes 112. The central hole 111 corresponds in position to the axis of the rear wheel transmission member 1. The first positioning holes 112 are arranged to surround the central hole 111. The hub connector 200 is received in the rear hub 100 and has an axial post 210 and a plurality of second positioning holes 220. The hub connector 200 is coupled to the rear wheel transmission member 1. A fixing hole 211 is disposed at an end of the axial post 210. The axial post 210 is coaxial with the axis of the rear wheel transmission member 1 and penetrates the central hole 111. The second positioning holes 220 are in communication with the first positioning holes 112, respectively. The quick release holder 300 is disposed on the end plate 110 and opposite the hub connector 200. The quick release holder 300 has a coupling hole 310. The quick release bolts 400 are fixed to the quick release holder 300 in a manner to face the rear hub 100. The quick release bolts 400 are inserted into the first positioning holes 112 and the second positioning holes 220, respectively. The fixing element 500 penetrates the coupling hole 310 of the quick release holder 300 so as to be fixed to the fixing hole 211 of the hub connector 200 to thereby mount the hub connector 200, the rear hub 100 and the quick release holder 300 in place.

Therefore, the hub connector 200, the rear hub 100 and the quick release holder 300 are mounted in place by the fixing element 500. The insertion of the quick release bolts 400 into the first positioning holes 112 and the second positioning holes 220 places a limit on the positions of the hub connector 200, the rear hub 100 and the quick release holder 300 relative to each other, thereby preventing the hub connector 200, the rear hub 100 and the quick release holder 300 from moving relative to each other. Separating the hub from the transmission axle member 1 just requires unmounting the fixing element 500 from the fixing hole 211, quickly and easily.

The fixing element 500 is a screw, whereas the fixing hole 211 is a screw hole.

In this embodiment, the first positioning holes 112, the second positioning holes 220 and the quick release bolts 400 are in a number of four, respectively. Preferably, the first positioning holes 112 are arranged to surround the central hole 111 and spaced apart equidistantly. The second positioning holes 220 correspond in position to the first positioning holes 112 so that the second positioning holes 220 are arranged in a circle and spaced apart equidistantly.

In this embodiment, the coupling hole 310 is centrally disposed at the quick release holder 300, and the quick release bolts 400 are arranged to surround the coupling hole 310 and spaced apart equidistantly.

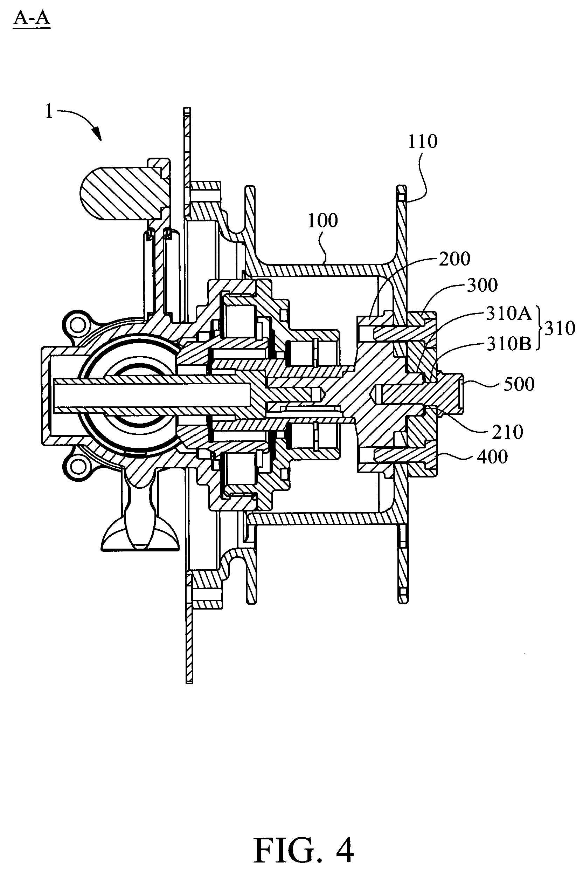

Referring to FIG. 4, the coupling hole 310 of the quick release holder 300 has a first hole portion 310A and a second hole portion 310B. The first hole portion 310A corresponds in shape to the axial post 210 to receive one end of the axial post 210 so that the axial post 210 can be engaged with the first hole portion 310A. The second hole portion 310B corresponds in shape to the fixing element 500 so as to be penetrated by the fixing element 500. In this embodiment, as shown in the diagram, the axial post 210 has a larger outer diameter than the front screw part of the fixing element 500, and thus the first hole portion A has a larger inner diameter than the second hole portion 310B; hence, the coupling hole 310 is stepped, whereas the front end of the axial post 210 is engaged with the first hole portion 310A to align the fixing hole 211 with the second hole portion 310B, thereby facilitating the penetration of the fixing element 500.

In conclusion, in an embodiment of the present invention, a rear wheel quick release structure has an advantage, that is, demounting the fixing element enables the separation of a rear wheel and a rear wheel transmission member so that the rear wheel can be mounted and demounted easily, quickly and conveniently.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A bicycle rear wheel quick release structure, comprising:
a rear hub being cylindrical and having therein a receiving space for receiving a rear wheel transmission member, wherein the rear hub is flanked by an end plate and an opening, with the end plate having a central hole and a plurality of first positioning holes, the central hole corresponding in position to an axis of the rear wheel transmission member, and the first positioning holes being arranged to surround the central hole;
a hub connector received in the rear hub, having an axial post and a plurality of second positioning holes, and coupled to the rear wheel transmission member, wherein a fixing hole is disposed at an end of the axial post, the axial post being coaxial with the axis of the rear wheel transmission member and penetrating the central hole, and the second positioning holes being in communication with the first positioning holes, respectively;
a quick release holder disposed on the end plate and opposite the hub connector and having a coupling hole;
a plurality of quick release bolts fixed to the quick release holder, facing the rear hub, and inserted into the first and second positioning holes, respectively; and
a fixing element penetrating the coupling hole of the quick release holder and fixed to the fixing hole of the hub connector to thereby mount the hub connector, the rear hub and the quick release holder in place.

2. The bicycle rear wheel quick release structure of claim 1, wherein the first positioning holes, the second positioning holes and the quick release bolts are in a number of four, respectively.

3. The bicycle rear wheel quick release structure of claim 1, wherein the coupling hole of the quick release holder has a first hole portion and a second hole portion, with the first hole portion corresponding in shape to the axial post to receive an end of the axial post, and the second hole portion corresponding in shape to the fixing element so as to be penetrated by the fixing element.

4. The bicycle rear wheel quick release structure of claim 2, wherein the coupling hole of the quick release holder has a first hole portion and a second hole portion, with the first hole portion corresponding in shape to the axial post to receive an end of the axial post, and the second hole portion corresponding in shape to the fixing element so as to be penetrated by the fixing element.

5. The bicycle rear wheel quick release structure of claim 3, wherein the coupling hole is centrally disposed at the quick release holder, with the quick release bolts arranged to surround the coupling hole and spaced apart equidistantly.

6. The bicycle rear wheel quick release structure of claim 4, wherein the coupling hole is centrally disposed at the quick release holder, with the quick release bolts arranged to surround the coupling hole and spaced apart equidistantly.

7. The bicycle rear wheel quick release structure of claim 5, wherein the fixing element is a screw, whereas the fixing hole is a screw hole.

8. The bicycle rear wheel quick release structure of claim 6, wherein the fixing element is a screw, whereas the fixing hole is a screw hole.
